Europäisches Patentamt

**European Patent Office**

**Office européen des brevets**

(11) Publication number: **0 058 788**
A1

## EUROPEAN PATENT APPLICATION

(21) Application number: 81300718.4

(22) Date of filing: 20.02.81

(51) Int. Cl.³: **B 24 B 47/04,** B 24 B 47/06

(43) Date of publication of application: 01.09.82
Bulletin 82/35

(84) Designated Contracting States: **AT BE CH DE FR IT LI LU NL SE**

(71) Applicant: **A.A. Jones & Shipman Limited, P.O. Box 89 Narborough Road South, Leicester LE3 2LF (GB)**

(72) Inventor: **Pratt, Jeffrey, 42 Ruskington Drive, Wigston Leicestershire (GB)**

(74) Representative: **Hallam, Arnold Vincent, E.N. LEWIS & TAYLOR 144 New Walk, Leicester LE1 7JA (GB)**

(54) **Apparatus for mounting a workpiece.**

(57) The apparatus comprises a platform (12) on which the workpiece is mounted and which is reciprocable on a base plate (20), the base plate being secured in the machine tool. The platform is coupled to a drive motor (36) capable of reciprocating the platform at high speeds. A counterbalance (26) is coupled to the platform in such a manner that during reciprocation of the platform the counterbalance moves in the opposite direction.

Title:  Apparatus for mounting a workpiece

The present invention relates to an apparatus for
mounting a workpiece in a machine tool such as a grinding
or milling machine.

In, for example the grinding of a slot in a workpiece
the latter is first secured to a work-holding table of a
grinding machine and then the grinding operation is
commenced.  The slot may be ground by a single slow
traverse of the work-holding table past a rotating
grinding wheel with the latter positioned so that the
full depth of the slot is ground in a single pass of the
workpiece.  A typical traverse speed for the table would
normally lie in the range 25 mm/minute to 300 mm/minute.
This method of grinding is known as "creep-feed" grinding.
Another method of grinding, known as "pendulum" grinding
may also be used.  Here the table is reciprocated at a
higher speed with the grinding wheel being lowered a small
amount at the end of each traverse of the table to grind
away a small portion of the slot until the required slot
depth is achieved.  In this case the traversing velocity
of the table is typically 30,000 mm/minute.

A disadvantage of "pendulum" grinding lies in its
applicability to the grinding of slots along workpieces of short lengths. The high traversing speeds of the
work-holding table combined with the high inertial
forces involved in first decelerating and then accelerating the table at the end of each stroke result in a
stroke which at its minimum can be considerably longer
than the workpiece being ground. It is frequently not
possible at a traversing speed of 30,000 mm/minute in
the mode known as "pendulum" grinding, to provide a
shorter stroke than approximately 75 mm, and if for
example the workpiece length, into which the slot is
being ground, is of the order of 5 mm then clearly
the majority of the traversing length is not employed
in metal cutting.

The present invention seeks to reduce the "overrun"
of the grinding wheel and therefore reduce the time of
the grinding operation.

Accordingly the present invention provides an
apparatus for mounting a workpiece in a machine tool, the
apparatus comprising a base for securing to a work-holding table
of the machine; a platform for supporting the workpiece, the platform
being slidable relative to said base and drive means for
reciprocably driving said platform.

Preferably the drive means is a drive motor and the apparatus further comprises coupling means for eccentrically coupling said platform to a drive shaft of said drive motor and wherein the angle between the rotational axis of said drive shaft and the reciprocal path of said platform is a preset angle.

In one embodiment of the present invention the platform includes a piston-cylinder arrangement for reciprocally driving said platform and said drive means comprises control means for controlling the flow of pressurised fluid to said piston cylinder arrangement.

The control means includes valve means for controlling the flow of fluid to respective fluid chambers of said piston-cylinder arrangement and trip means operable at the end of each stroke of the platform to trip said valve means for reversing the fluid flow to said piston-cylinder arrangement so as to reverse the direction of movement of said platform.

The pressurised fluid may be a liquid or a gas such as air.

Because of the relative light weight of a platform of an apparatus according to the present invention the platform may be reciprocated at high speeds with a precise and adjustable short stroke.

The present invention is further described hereinafter, by way of example, with reference to the accompanying drawings, in which:

Figure 1 is a plan view, partially in section, of a first embodiment of an apparatus according to the present invention;

Figure 2 is a side elevation, partially in section, of the apparatus of Figure 1;

Figure 3 is a section on line A-A of Figure 1;

Figure 4 is a section on line B-B of Figure 1;

Figure 5 is a plan view of a portion of the apparatus of Figure 1 showing the drive motor inclined at an angle of 135° to the reciprocating axis;

-5-

Figure 6 is a view similar to Figure 5 showing the drive motor at an angle of 90° to the reciprocating axis;

Figure 7 is a view similar to Figure 1 of a second embodiment of an apparatus according to the present invention;

Figure 8 is a side elevation, partially in section, of the apparatus of Figure 7;

Figure 9 is a section on line C-C of Figure 7; and

Figure 10 is a section on line D-D of Figure 7.

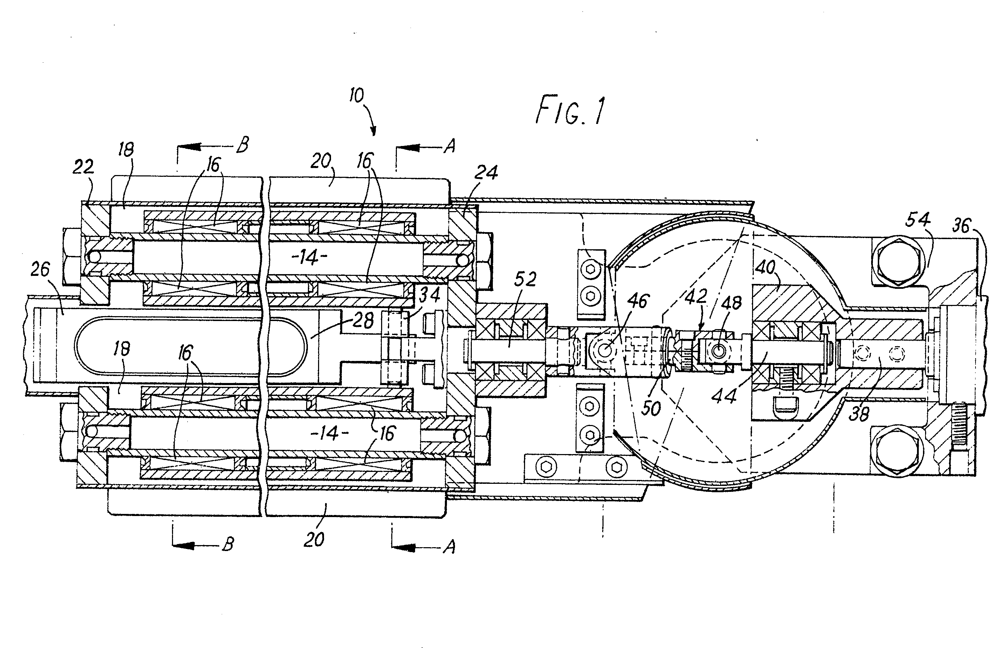

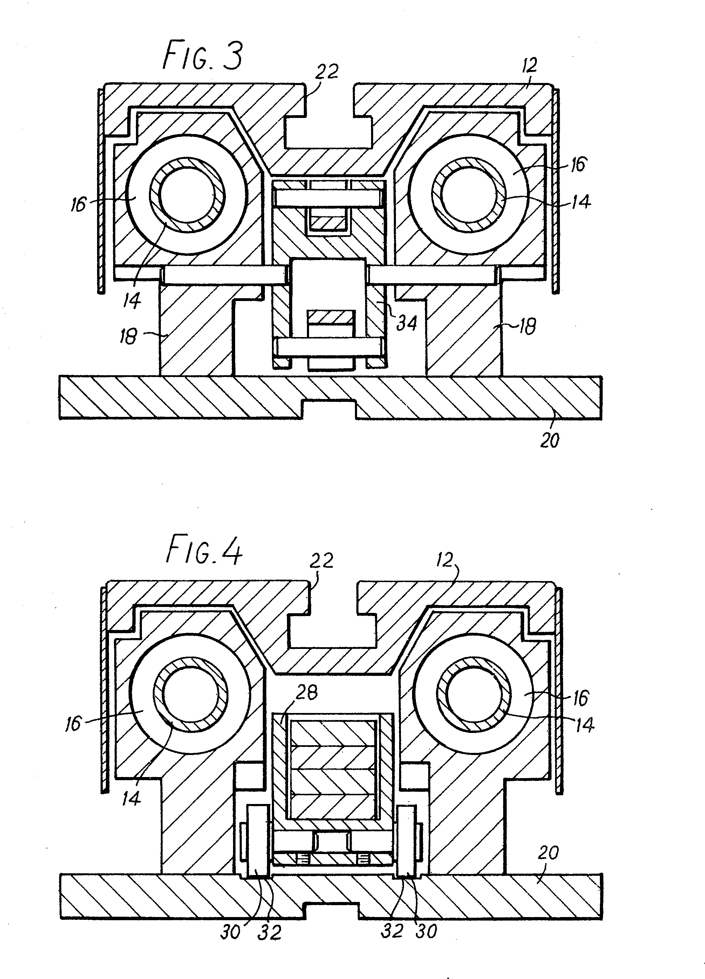

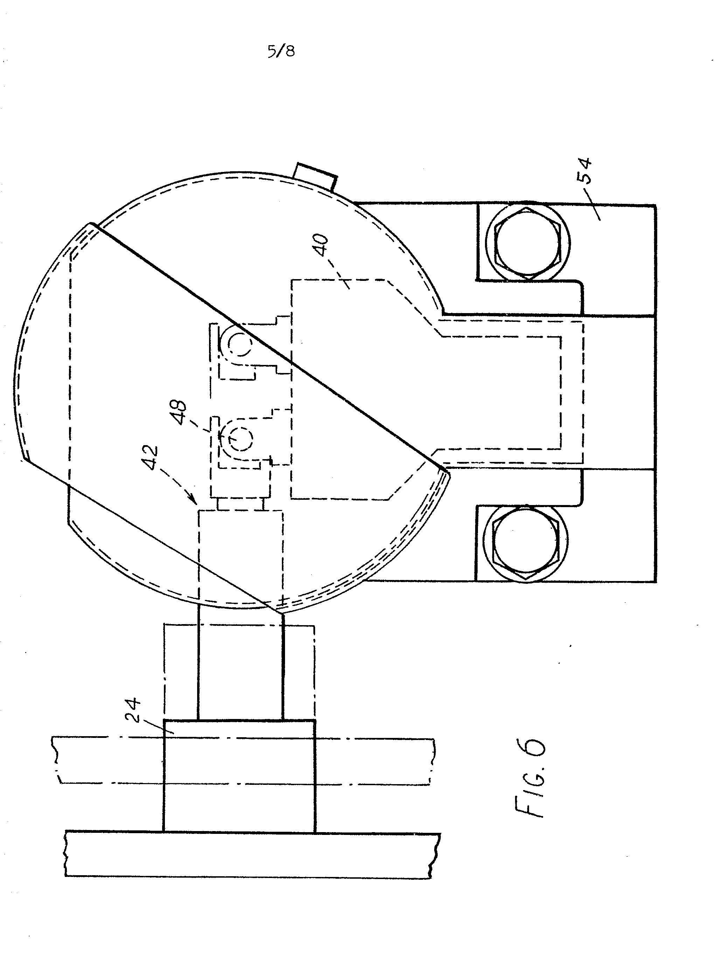

Referring to Figures 1 to 6 the illustrated apparatus 10 comprises an elongate platform 12 for supporting a workpiece to be machined, the platform being slidably mounted by way of two hard steel guide bars 14 of circular cross-section which are secured to the platform 12 longitudinally thereof by means of two end plates 22, 24, one guide bar 14 on each side of the central axis of the platform 12. Each guide bar 14 is mounted for reciprocal movement in two coaxial closed-shell ball bushings 16 which are secured in a respective housing 18 in turn securely mounted on a base plate 20.

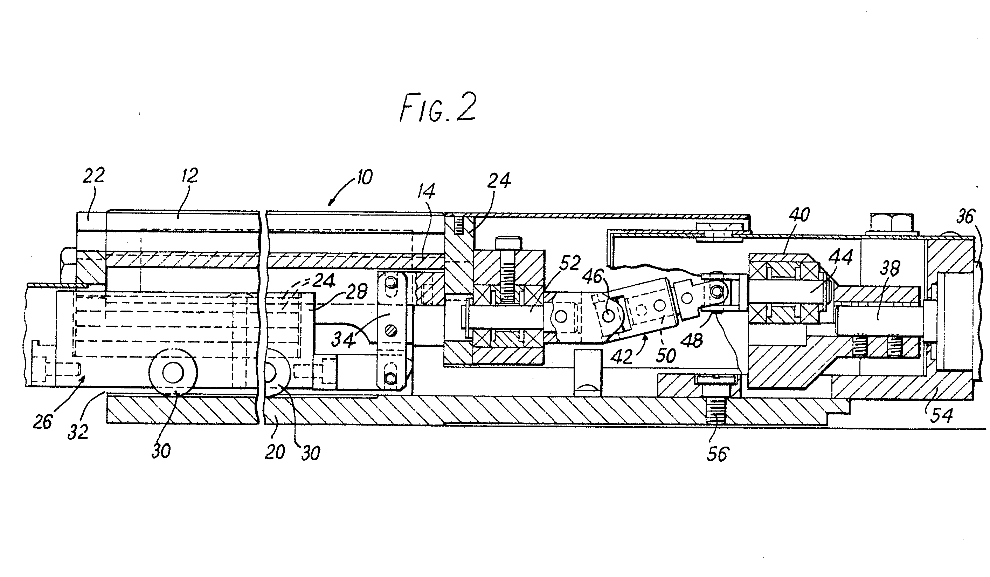

A 'T' slot 22 is provided in the upper surface of the platform 12 to receive a workpiece holding device. The platform 12 is coupled to a drive motor 36 which reciprocates the former during a machining operation as is described in greater detail below. To avoid undue stresses and vibrations being set up during reciprocation of the platform 12 a counterbalance 26 is provided and is located beneath the platform and between the guide bars 14. The counterbalance comprises a trolley 28 mounted on wheels 30 which are guided in parallel track grooves 32 in the surface of the baseplate 20. The trolley is coupled to the end plate 24 via an arm 34 which is pivoted to the trolley and the end plate about parallel horizontal axes perpendicular to the direction of reciprocation of the platform 12 such that during

-7-

reciprocation of the platform 12 the trolley 28 moves in an opposite direction and with an equal velocity to that of the platform and associated workpiece. The trolley, is detachable from the apparatus and can be loaded with various values of dead weights 24, shown in dotted form in Figure 2, enabling an accurate match of mass and balance to be achieved between the counter balance 26 and the platform 12 and its associated load.

High speed simple harmonic motion is applied to the platform 12 by means of the motor 36, which may be an air, electric or hydraulic motor. The drive shaft 38 of the motor mounts a drive plate 40 which is coupled to the end plate 24 by means of a flexible joint 42. The joint comprises a swivel shaft 44 which is rotatably and eccentrically mounted in the drive plate 40 with the rotational axis of the shaft 44 parallel to the rotational axis of the plate 40 and drive shaft 38. The swivel shaft 44 is coupled by way of two universal couplings 46, 48 and an intermediate link 50 to a bearing shaft 52 which is rotatably mounted in the end plate 24. The rotational axis of the shaft 52 is preferably aligned with the rotational axis of the motor drive shaft 38 in the position of the motor as shown in Figures 1 and 2 although this is not essential to the operation of the apparatus.

In the in-line condition of the motor, as shown in
Figures 1 and 2 rotation of the motor drive shaft 38
merely rotates the shaft 52 with no reciprocating simple
harmonic motion of the platform 12.

The motor 36, is spigotally secured in a bracket
54, which is in turn pivotally mounted on the baseplate
20 by means of a pivot pin 56, precisely and accurately
located beneath the centre line of the universal coupling
48. This allows the angle that the motor drive shaft
axis makes with the axis of the shaft 52 to be varied
through 90° between an aligned attitude and one where the
axes are at right angles to one another, by pivoting the
motor 36 about the pivot pin 56. With the motor 36 in the
position shown in Figures 1 and 2 the plane of the circle
prescribed by the shaft 44 is perpendicular to the axis of
the shaft 52 and there is therefore no reciprocation of
the latter and thus of the platform 12. With the motor
pivoted through 90° the axis of the shaft 52 lies in the
plane of the circle and the extent of the reciprocation
applied to the platform 12 is determined by the eccentricity
of the shaft 44. With a preferable eccentricity of 25 mm
the maximum reciprocating stroke is 50 mm, with the flexible
joint 42 acting merely as a crank.

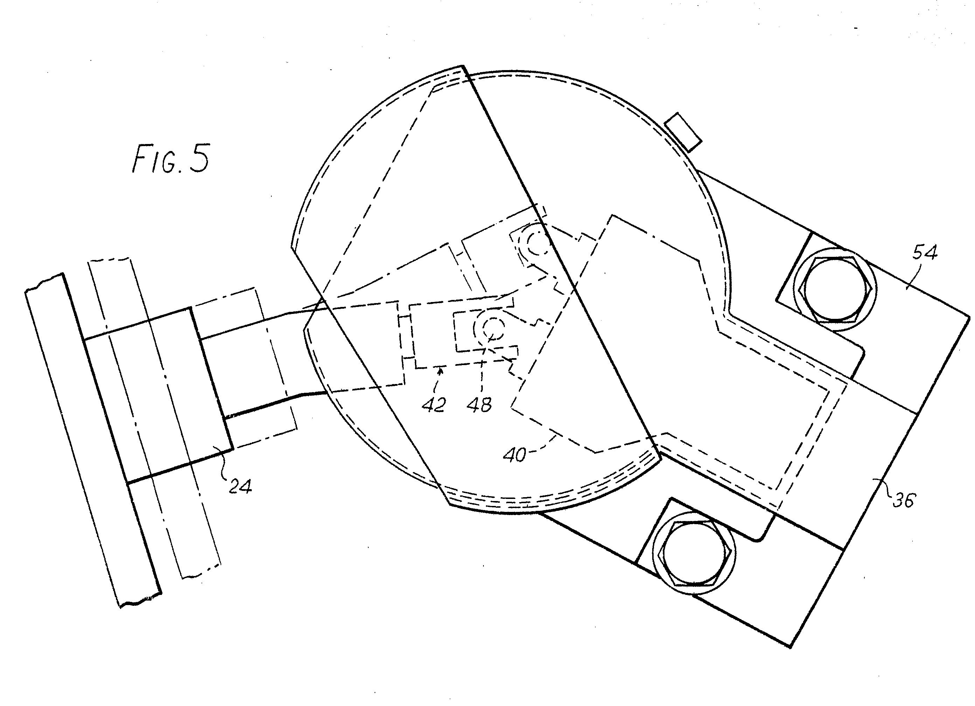

As will be appreciated the stroke of the platform 12
is infinitely variable between its maximum of 50 mm and zero motion, by discretely adjusting the angular position of the air motor about its pivot pin 56. For example, the situation obtaining when the motor is at an angular position of 45°, relative to the longitudinal axis of the work support table, is shown in Figure 5,

in which case the universal jointed transmission lines no longer act as a simple crank, but acts so to accommodate the variable and angular velocities imparted in this condition.

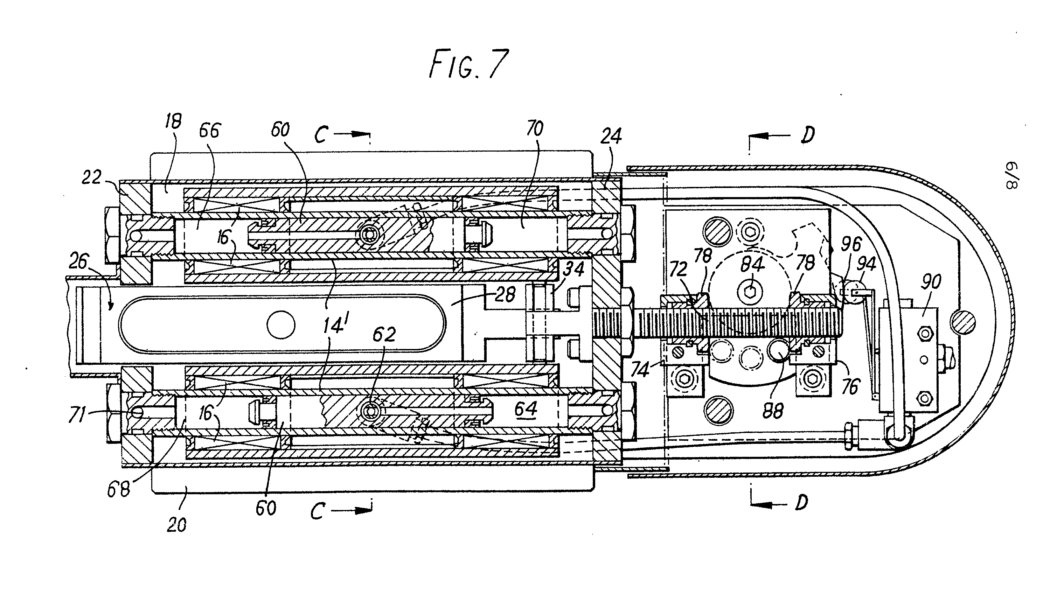

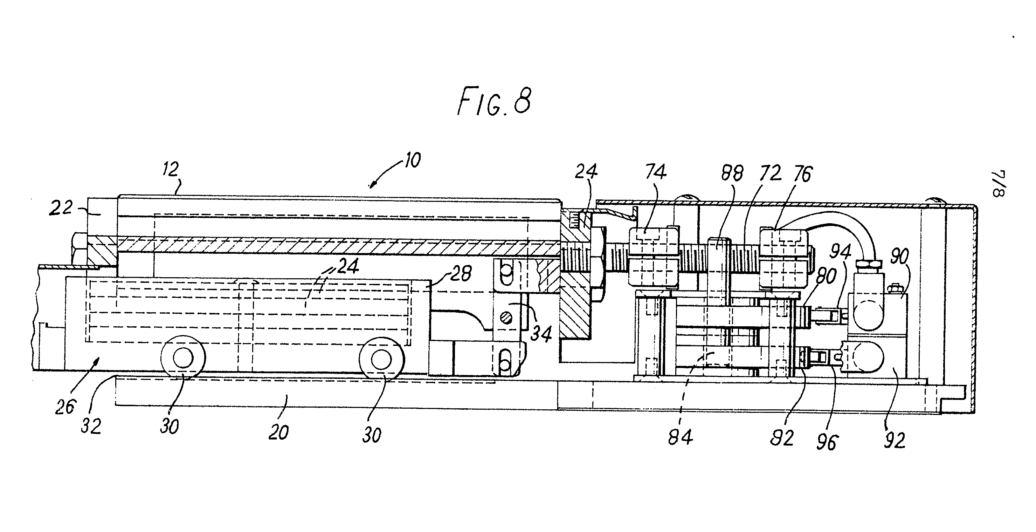

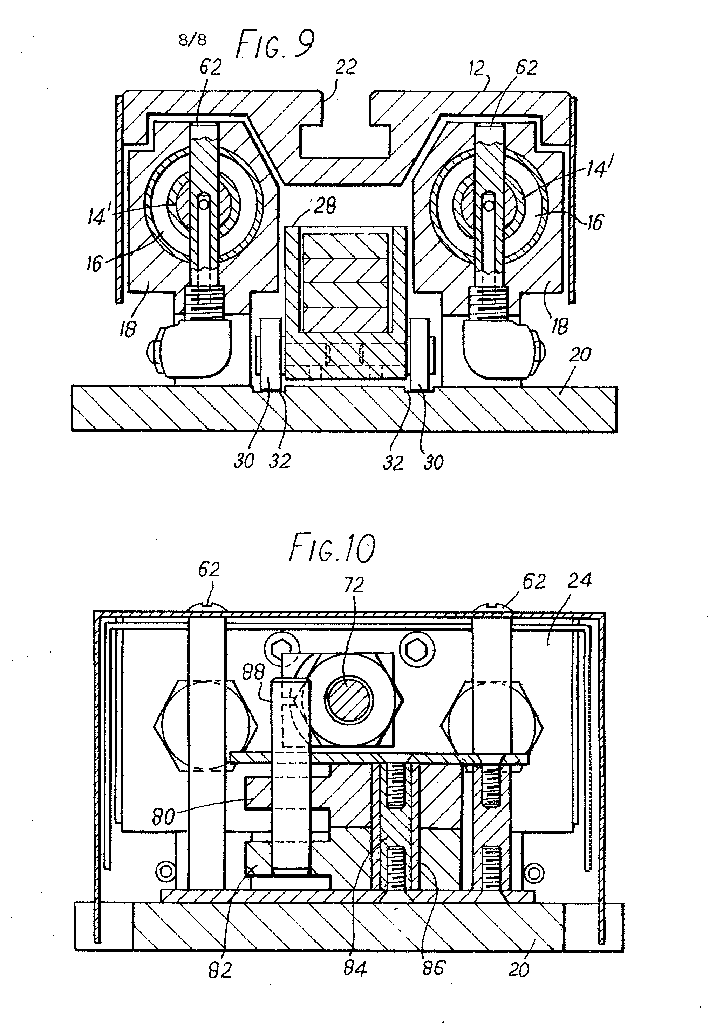

A further embodiment of apparatus according to the present invention is shown in Figures 7 to 10. Parts similar to those in Figures 1 to 6 are given like reference numbers. In this embodiment the platform 12 and its mountings are similar to those of the apparatus shown in Figures 1 to 6. The reciprocation, however, of the platform 12 is achieved differently. The guide bar 14' is hollow, with its bore honed to a fine finish, and serves with a respective piston 60 as a double-acting piston cylinder unit. Each piston is secured by a dowel 62 to the housing 18. Each dowel is drilled and cross connected to drillings in the associated piston 60 and forms a passageway for pressurised fluid, in this case air, to enter and exhaust from a respective one of the two pressure chambers 64, 66 formed by each piston 60 and the culinder 14'. The two chambers 64 and 70 are inter-connected by passageways 71 as are the two chambers 66 and 68 so that when pressurised fluid is applied to, for example chamber
64, fluid is also forced into chamber 70 to drive the
platform in a first direction, fluid being exhausted from
chambers 66 and 68. Reversing the flow of fluid reverses
the movement of the platform 12.

The alternating supply of pressurised fluid to the chambers
64,70 and 66,68 is controlled by an assembly comprising a
trip bar 72 which is secured to the right hand end plate
24 and equipped with left and right hand clamps 74, 76
which are adjustable along the length of trip bar 72 by
means of nuts 78. The whole of this assembly reciprocates
with the platform 12.

Two cams 80, 82 mounted one above the other are
rigidly secured to one another and are freely rotatably
mounted on a pivot 84 by way of a bush 86. A pin 88 is
secured to the upper face of the upper cam 80 and is
arranged to be contacted by the opposing faces of the
right and left hand clamps 74, 76 during movement of
the platform 12 so that the cams 80, 82 are partially
rotated by the movement of the trip bar 72. The linear
movement of the trip bar 72 is thus converted into
rotary movement of the cams 80, 82.

The flow of pressurised fluid from a common source (not shown) to the respective pistons 60 is controlled by two fluid control valves 90, 92 which are secured to the baseplate 20 in such a manner that their operating levers 94, 96 make contact respectively with the upper and lower cam profiled on the cams 80, 82. The cam profiles are arranged such that rotation of the cams to one extreme angular position as a result of movement of the platform 12 in a first direction trips the two control valves 90, 92 reversing the direction of fluid flow to reverse the movement of the platform 12. This reversal of movement also reverses rotation of the cams until the cam profile again trip the valves, thus once more reversing the fluid flow and resulting in a reciprocating movement of the platform 12. The stroke of the platform 12 is adjusted by adjusting the position of the clamps 74 and 76 along the tripbar 72.

In use on apparatus according to the present invention is secured on a work-holding table of a machine tool such as a grinding machine. The table remains stationary and the platform of the apparatus may apply typically 1,000 strokes/minute, irrespective of the stroke length, at a maximum traverse speed of 36,000 mm/minute. Because the stroke is relatively short, the grinding wheel may be fed towards the workpiece at a continuous speed rather than in
increments.

With regard to Figure 7 although two piston-cylinder
units are described it will be appreciated that the apparatus
will operate with only one piston-cylinder unit preferably
located centrally of the platform.

CLAIMS:

1. An apparatus for mounting a workpiece in a machine tool, characterised in that there is provided a base (20) for securing to a work-holding table of the machine; a platform (12) for supporting the workpiece, the platform being slidable relative to said base and drive means (36) for reciprocally driving said platform.

2. Apparatus as claimed in claim 2 further comprising a counterbalance weight (26) coupled to said platform (12) such that said counterbalance weight is reciprocable in an opposite sense to the platform.

3. Apparatus as claimed in claim 2 wherein the weight of said counterbalance weight (26) is adjustable.

4. Apparatus as claimed in claims 1, 2 or 3 wherein said drive means is a drive motor (36) and further comprising coupling means (42) for eccentrically coupling said platform (12) to a drive shaft (44) of said drive motor and wherein the angle between the rotational axis of said drive shaft and the reciprocal path of said platform is a preset angle.

5. Apparatus as claimed in claim 4 wherein said angle is adjustable between 0 and 90°.

6. Apparatus a s claimed in claim 1, 2 or 3 wherein said platform (12) includes a piston-cylinder arrangement (14', 60) for reciprocally driving said platform (12) and said drive means comprises control means (72, 80, 82, 90, 92) for controlling the flow of pressurised fluid to said piston cylinder arrangement.

7. Apparatus as claimed in claim 6 wherein said control means includes valve means (90,92) for controlling the flow of fluid to respective fluid chambers (64, 66, 68, 70) of said piston-cylinder arrangement and trip means operable at the end of each stroke of the platform to trip said valve means for reversing the fluid flow to said piston-cylinder arrangement so as to reverse the direction of movement of said platform (12).

8. Apparatus as claimed in claim 7 wherein said trip means comprises cam means (80,82) rotatably drivable by said platform between first and second extreme angular positions and rotation of said cam means into each of said positions trips said valve means.

9. Apparatus as claimed in claim 8 wherein said cam means (80,82) is coupled to said platform (12) by way of a lost motion coupling (74, 76, 88) and the degree of lost motion is adjustable to vary the stroke of said platform (12).

10. Apparatus as claimed in any of claims 1 to 9 wherein the stroke of said platform is adjustable in the range 0mm to 50mm.

FIG.1

FIG.2

FIG. 3

FIG. 4

FIG.5

24

42  48

40

54

36

0058788

FIG. 6

0058788

FIG. 7

0058788

FIG.8

0058788

/8    FIG.9

FIG.10

## EUROPEAN SEARCH REPORT

**European Patent Office**

Application number

EP 81 30 0718

### DOCUMENTS CONSIDERED TO BE RELEVANT

| Category | Citation of document with indication, where appropriate, of relevant passages | Relevant to claim |
|---|---|---|
| X | **US - A - 2 729 034** (FRANK) <br> * Column 2, lines 3-24; figures * | 1 |
| | **US - A - 3 757 638** (MARTIN) <br> * Column 3, lines 3-12; figure 3 * | 2,3 |
| | **DE - B - 1 200 633** (HEIN) <br> * Entire document * | 4,5 |
| | **US - A - 3 281 994** (ROBINSON) <br> * Entire document * | 6-10 |
| A | **US - A - 2 706 467** (HOULDSWORTH) | |
| A | **US - A - 3 073 072** (SELBY) | |
| A | **DE - B - 1 104 786** (MILTON) | |
| A | **FR - A - 2 380 843** (PROIZ VODSTVENNOE) | |

**CLASSIFICATION OF THE APPLICATION (Int. Cl.³)**

B 24 B 47/04
47/06

**TECHNICAL FIELDS SEARCHED (Int. Cl.³)**

B 24 B
B 23 Q
F 16 H

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-10-1981 | PEETERS S. |

EPO Form 1503.1  06.78